# EUROPEAN PATENT APPLICATION

(11) **EP 1 801 687 A1**
(43) Date of publication of application: **27.06.2007**
(21) Application number: 06255931.5
(22) Date of filing: 21.11.2006
(51) Int. Cl.: G06F 1/14, H04J 3/06

(54) **Correcting time synchronization inaccuracy caused by internal asymmetric delays in a communication device**

(30) Priority: 23.12.2005 US 317357
(71) Applicant: Agilent Technologies, Inc., Santa Clara, CA 95051 (US)
(72) Inventor: Eidson, John C., Loveland, CO 80537-0599 (US)
(74) Representative: Exell, Jonathan Mark

(57) **Abstract**

A method for time synchronization that avoids time synchronization inaccuracies caused by asymmetric delays internal to a device 300. Time synchronization according to the present teachings includes determining an asymmetry between an internal delay of an inbound timing packet 40 in a device 300 and an internal delay of an outbound timing packet 42 in the device 300 and correcting a time synchronization in response to the asymmetry.

## Description

### BACKGROUND

A wide variety of devices may include a local clock that maintains a time-of-day. Examples of devices that may have a local time-of-day clock include computer systems, test instruments, industrial control devices, environmental control devices, and home appliances.

A time synchronization protocol may be used to synchronize a local clock in a device. A time synchronization protocol may be one in which a device exchanges timing information with a reference time source via a communication link. The exchanged timing information may be used to determine a clock offset that indicates a relative time difference between a local clock and a reference time source. For example, the IEEE 1588 time synchronization protocol includes the exchange of timing packets via a communication link.

A time synchronization protocol, e.g. the IEEE 1588 time synchronization protocol, may base its time synchronization calculations on an assumption that the timing packets exchanged between a local clock and a reference clock experience symmetric delays. Timing packets experience symmetric delays if a delay in the transfer of a timing packet from a local clock to a reference clock equals a delay in the transfer of a timing packet from the reference clock to the local clock. Unfortunately, the internal structure and functions of a device may introduce an asymmetry between the delays of inbound timing packets and outbound timing packets. For example, the components and data paths inside a device that handle inbound timing packets may introduce a greater delay than the components and data paths in the device that handle outbound timing packets, or visa versa. The asymmetric delays between inbound and outbound timing packets within a device may reduce the accuracy of time synchronization.

### SUMMARY OF THE INVENTION

A method for time synchronization is disclosed that avoids time synchronization inaccuracies caused by asymmetric delays internal to a device. Time synchronization according to the present teachings includes determining an asymmetry between an internal delay of an inbound timing packet in a device and an internal delay of an outbound timing packet in the device and correcting a time synchronization in response to the asymmetry.

Other features and advantages of the present invention will be apparent from the detailed description that follows.

### BRIEF DESCRIPTION OF THE DRAWINGS

The present invention is described with respect to particular exemplary embodiments thereof and reference is accordingly made to the drawings in which:
**Figure 1** shows a device having internal asymmetric delays in the handling of inbound and outbound timing packets;
**Figure 2** illustrates a technique for determining an asymmetry between the internal delay experienced by inbound timing packets and the internal delay experienced by outbound timing packets in a device;
**Figure 3** illustrates another technique for determining an asymmetry between the internal delay experienced by inbound timing packets and the internal delay experienced by outbound timing packets in a device.

### DETAILED DESCRIPTION

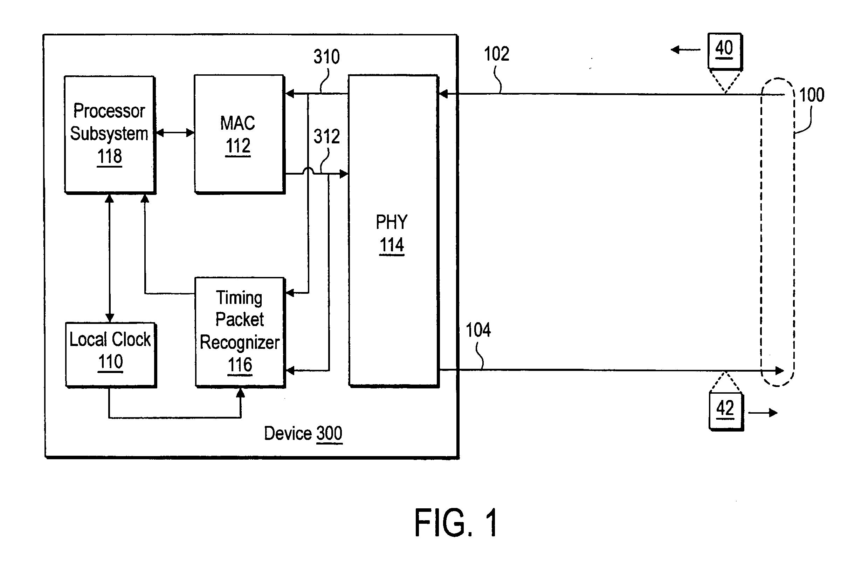

**Figure 1** shows a device 300 having internal asymmetric delays in the handling of inbound and outbound timing packets. The device 300 includes a processor subsystem 118 that maintains time synchronization in a local clock 110 by transmitting and receiving timing packets via a communication link 100. In one embodiment, the processor subsystem 118 synchronizes the local clock 110 according to the IEEE 1588 time synchronization protocol.

The device 300 includes a physical interface (PHY) 114 and a media access controller (MAC) 112. The processor subsystem 118 includes code that provides a network protocol stack for communication via the communication link 100.

The PHY 114 receives an inbound timing packet 40 via a first portion 102 of the communication link 100 and routes the inbound timing packet 40 to processor subsystem 118 via an inbound data path 310 and the MAC 112. The device 300 includes a timing packet recognizer 116 that generates a timestamp when it detects the inbound timing packet 40 on the inbound data path 310 and that timestamp is used in calculations to determine a clock offset for the local clock 110.

The processor subsystem 118 generates an outbound timing packet 42 and routes the outbound timing packet 42 to the PHY 114 via the MAC 112 and an outbound data path 312. The PHY 114 transmits the outbound timing packet 42 via a second portion 104 of the communication link 100. The timing packet recognizer 116 generates a timestamp when it detects the outbound timing packet 42 on the outbound data path 312 and that timestamp is also used to determine the clock offset for the local clock 110.

The internal structure and functions of the device 300 create asymmetric delays in the handling of the inbound and outbound timing packets 40 and 42 within the device 300. For example, the PHY 114 may introduce a greater delay when handling the inbound timing packet 40 than when handling the outbound timing packet 42, or visa versa. In another example, the delay of the inbound timing packet 40 as it moves from the point of connection of the device 300 to the communication link 100 to the point on the inbound data path 310 wherein it is detected by the timing packet recognizer 116 may be different from the delay of the outbound timing packet 42 as it moves from the point on the outbound data path 312 where it is detected by the timing packet recognizer 116 to point where the device 300 connects to the communication link 100. These asymmetries in the inbound and outbound delays is reflected in the timestamps generated by timing packet recognizer 116.

The present techniques include determining the asymmetry, i.e. the difference, between the delay experienced by the inbound timing packet 40 in the device 300 and the delay experienced by the outbound timing packet 42 within the device 300 and correcting time synchronization for the local clock 110 using the asymmetry.

Example embodiments of the device 300 include computer systems, test instruments, industrial control devices, environmental control devices, home appliances, etc.

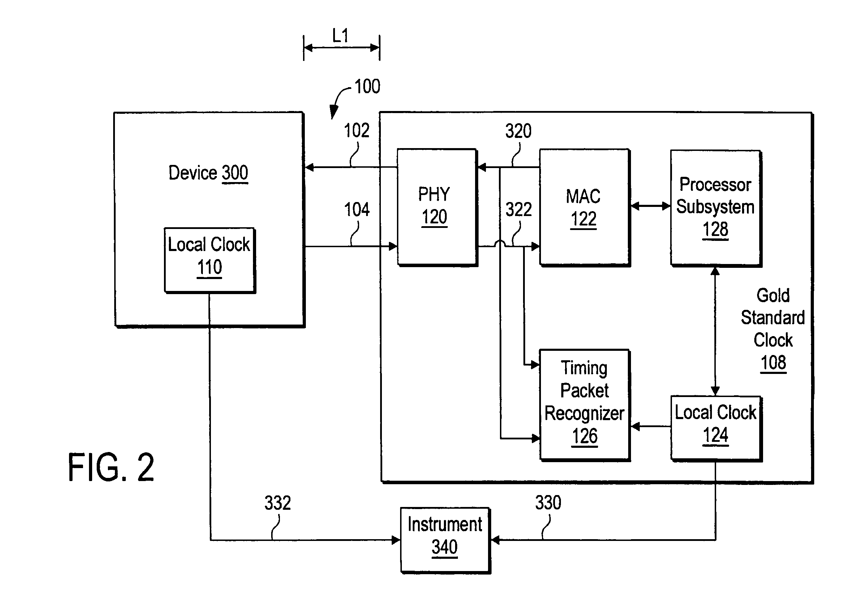

**Figure 2** illustrates a technique for determining an asymmetry between the delay experienced by inbound timing packets in the device 300 and the delay experienced by outbound timing packets in the device 300 according to the present teachings. In this technique, the device 300 synchronizes the local clock 110 by exchanging timing packets with a gold standard clock 108 via the communication link 100. The device 300 and the gold standard clock 108 measure the transmit and receive times of the timing packets and the device 300 determines a clock offset to the local clock 110 in response to the timing packets and the measured transmit and receive times according to the IEEE 1588 time synchronization protocol.

The gold standard clock 108 includes a processor subsystem 128, a PHY 120, a MAC 122, a local clock 124, and a timing packet recognizer 126. The PHY 120 receives timing packets via the second portion 104 of the communication link 100 and routes the received timing packets to the processor subsystem 128 via an inbound data path 322 and the MAC 122. The timing packet recognizer 126 generates timestamps upon when it detects the timing packets carried on the inbound data path 322. The processor subsystem 128 generates timing packets and routes timing packets to the PHY 120 via the MAC 122 an outbound data path 320. The PHY 120 transmits the timing packets obtained from the processor subsystem 128 via the first portion 102 of the communication link 100. The timing packet recognizer 126 generates timestamps when it detects the timing packets on the outbound data path 320.

In one embodiment, selected internal structures and functions of the gold standard clock 108 are designed and implemented to yield an asymmetric delay in the handling of timing packets internal to the gold standard clock 108 that is less than a predetermined amount. The predetermined amount may be a negligible asymmetry given the accuracy of time synchronization sought. For example, the PHY 120 may be implemented such that the delay in the PHY 120 of timing packets received from the device 300 is substantially equal to the delay in the PHY 120 of timing packets generated by the processor subsystem 128. In addition, the inbound and outbound data paths 322 and 320 may be implemented such that the propagation delays to detection points for the timing packet recognizer 126 are known or substantially symmetric.

Once the gold standard clock 108 and the device 300 synchronize the time-of-day in the local clock 110 to the time-of-day in the local clock 124 using a time synchronization protocol as describe above, a time difference between the local clock 124 and the local clock 110 indicates an internal delay asymmetry in the device 300 because the gold standard clock 108 has a known or negligible internal delay asymmetry.

The communication link 100 may be implemented so that it causes an insubstantial amount of asymmetry in the propagation delays on the first and second portions 102 and 104 of the communication link 100. For example, a length L1 of the communication link 100 may be so short that any propagation delay asymmetry is negligible given the accuracy of time synchronization sought. The communication link 100 may be designed and constructed to have an insubstantial amount of asymmetry in the first and second portions 102 and 104, e.g. by calibrating transmission line lengths. The communication link 100 may be calibrated so that any asymmetry in the first and second portions 102 and 104 is known and may be incorporated into time adjustment calculations.

The difference between the local clock 124 and the local clock 110 may be measured by measuring a timing feature 330 of the local clock 124 and a timing feature 332 of the local clock 110. One example of a timing feature is a seconds boundary, e.g. a pulse-per-second (PPS) signal generated by the local clock 124 and the local clock 110. The timing features 330 and 332 may be measured using an instrument 340. The instrument 340 may be one of a variety of instruments, e.g. a time and frequency analyzer, that offer great precision.

The gold standard clock 108 may undergo a calibration procedure in which any asymmetry in its internal delays in handling timing packets is measured. The measured asymmetry may then be incorporated into clock offset calculations for the local clock 110.

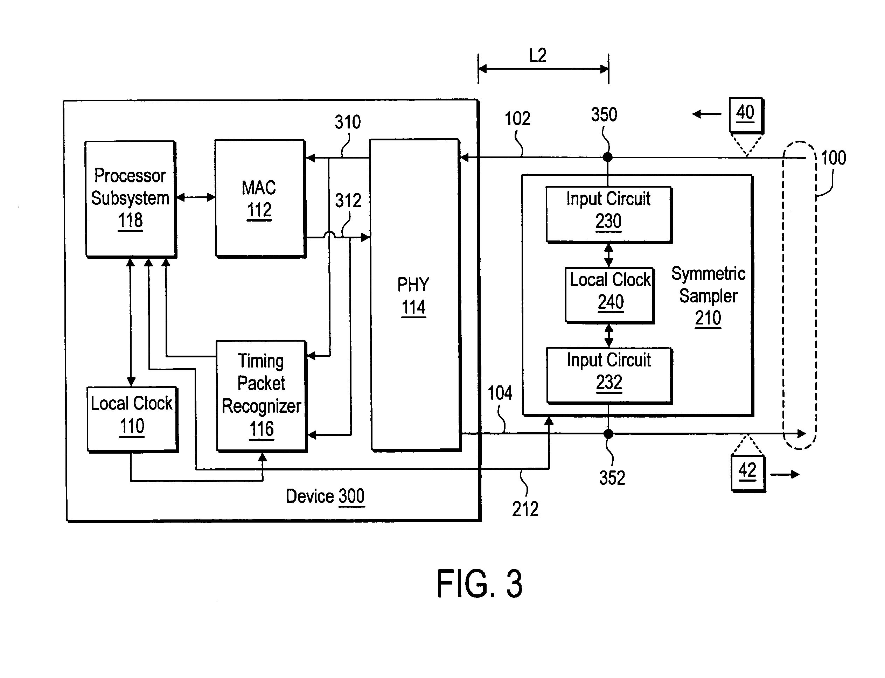

**Figure 3** illustrates another technique for determining an asymmetry between the delay experienced by inbound timing packets in the device 300 and the delay experienced by outbound timing packets in the device 300 according to the present teachings. In this technique, a symmetric sampler 210 is used to measure the delays internal to the device 300.

The symmetric sampler 210 samples the first portion 102 of the communication link 100 and samples the second portion 104 of the communication link 100. The distance L2 between the attachment points 350 and 352 of the symmetric sampler 210 to the communication link 100 is selected so that it is close enough to the device 300 to minimize the effects of propagation delay asymmetry between the first and second portions 102 and 104 of the communication link 100. Alternatively, the first and second portions 102 and 104 may be calibrated to remove propagation delay asymmetry.

The symmetric sampler 210 includes a pair of input circuits 230 and 232 that sample, e.g. snoop, the first portion 102 and the second portion 104, respectively, for timing packets. The input circuit 230 includes circuitry for generating timestamps when timing packets are detected on the first portion 102. The input circuit 232 includes circuitry for generating timestamps when timing packets are detected on the second portion 104. The input circuits 230 and 232 are designed and constructed to include substantially similar network input circuits that avoid causing asymmetry in the timestamp measurements. For example, the input circuits 230 and 232 may include substantially similar PHY circuits. The input circuits 230 and 232 generate their respective timestamps using a local clock 240 in the symmetric sampler 210.

The timing packet recognizer 116 generates a timestamp t1 when it detects the outbound timing packet 42 on the outbound data path 312. The input circuit 232 generates a timestamp t2 when it detects the outbound timing packet 42 on the second portion 104 of the communication link 100. The time td1=t2-t1 is the delay between detection by the timing packet recognizer 116 and the attachment point 352.

The input circuit 230 generates a timestamp t3 when it detects the inbound timing packet 40 on the first portion 102 of the communication link 100. The timing packet recognizer 116 generates a timestamp t4 when it senses the inbound timing packet 40 on the inbound data path 310. The time td2=t4-t3 is the delay between the attachment point 350 and the detection by the timing packet recognizer 116. The difference between td1 and td2 is the delay asymmetry internal to the device 300.

The symmetric sampler 210 may include a time synchronization circuit for synchronizing the local clock 240 with the local clock 110 using a synchronization protocol, e.g. IEEE 1588. For example, a processor in the symmetric sampler 210 may exchange timing packets with the processor subsystem 118 via the communication link 100 or via a calibration data path 212. The local clock 240 may be driven by the same oscillator signal that drives the local clock 110. The symmetric sampler 210 transfers the timestamps t2 and t3 to the processor subsystem 118 via the calibration data path 212 so that the processor subsystem 118 may determine the difference between td1 and td2 and use the result in determining a clock offset for the local clock 110.

The foregoing detailed description of the present invention is provided for the purposes of illustration and is not intended to be exhaustive or to limit the invention to the precise embodiment disclosed. Accordingly, the scope of the present invention is defined by the appended claims.

## Claims

1. A method for time synchronization, comprising:
determining an asymmetry between an internal delay of an inbound timing packet (40) in a device(300) and an internal delay of an outbound timing packet (42) in the device (3.00) ;
correcting a time synchronization in response to the asymmetry.

2. The method of claim 1, wherein determining an asymmetry comprises:
measuring the internal delay of the inbound timing packet (40);
measuring the internal delay of the outbound timing packet (42).

3. The method of claim 2, wherein measuring the internal delay of the inbound timing packet (40) comprises;
generating a first timestamp in response to the inbound timing packet (40) on a first portion (102) of a communication link (100);
generating a second timestamp inside the device(300) in response to the inbound timing packet (40).

4. The method of claim 3, wherein measuring the internal delay of the outbound timing packet (42) comprises;
generating a third timestamp inside the device(300) in response to the outbound timing packet (42);
generating a fourth timestamp in response to the outbound timing packet (42) on a second portion (104) of the communication link (100).

5. The method of claim 4, wherein determining an asymmetry comprises determining the asymmetry in response to the first, second, third, and fourth timestamps.

6. The method of claim 1, wherein determining an asymmetry comprises:
synchronizing a local clock (110) in the device(300) by exchanging a set of timing packets with a standard clock (108) having a predetermined amount of internal delay asymmetry;
determining a difference between a time in the local clock (110) and a time in the standard clock (108) such that the difference provides an indication of the asymmetry.

7. The method of claim 6, wherein exchanging a set of timing packets with a standard clock (108) comprises exchanging the timing packets with the standard clock (108) via a calibrated communication link.

8. The method of claim 6, wherein determining a difference between a time in the local clock (110) and a time in the standard clock (108) comprises comparing a timing feature (332) of the local clock (110) to a timing feature (330) of the standard clock (108).

9. A system with time synchronization, comprising:
device (300) having an asymmetry between an internal delay of an inbound timing packet (40) in the device (300) and an internal delay of an outbound timing packet (42) in the device(300);
symmetric sampler (210) for measuring the internal delays such that the measured internal delays enable a correction to a time synchronization for the device(300).

10. The system of claim 9, wherein the symmetric sampler (210) includes a local clock (240) that synchronizes with the local clock (110) in the device(300).
